# EUROPEAN PATENT APPLICATION

(11) **EP 1 091 595 A2**
(43) Date of publication of application: **11.04.2001**
(21) Application number: 00308742.6
(22) Date of filing: 04.10.2000
(51) Int. Cl.: H04N 9/804

(54) **Information recording apparatus**

(30) Priority: 04.10.1999 JP 28316799
(71) Applicant: Pioneer Corporation, Meguro-ku, Tokyo (JP)
(72) Inventor: Kimura, Tomohiro c/o Pioneer Corporation, Tokorozawa-shi, Saitama-ken (JP); Kawahara, Yasunari, c/o Pioneer Corporation, Tokorozawa-shi, Saitama-ken (JP); Umehara, Yasuyuki, Pioneer Corporation, Tokorozawa-shi, Saitama-ken (JP)
(74) Representative: Haley, Stephen

(57) **Abstract**

The information recording apparatus includes a compressive-encoder (14, 15) for compressive-encoding input information with varying recording rate to output compressed data; a recording mode switching unit (11) for switching recording mode for setting the recording mode in the compressive-encoder between standard mode in which predetermined standard recording rate is set and manual mode in which one recording rate selected from a plurality of recording rates; an operation unit (30) for setting the one recording rate in the manual mode; and a recording unit (17) for recording the compressed data outputted by the compressive-encoder onto an information storage medium.

## Description

The present invention relates to an information recording apparatus for encoding inputted information and recording it onto an information storage medium. More specifically, the present invention relates to an information recording apparatus which is capable of recording information with varying recording rate at the time of encoding.

Conventionally, there has been known an information recording apparatus which is capable of recording information with varying recording rate at the time of recording encoded video information and audio information. The information recording apparatus of this kind can select one of two recording modes, i.e., using high recording rate to record information with high picture quality, or using low recording rate to recording information for a long time, dependently upon the user's choice. In such a case, by increasing step number of recording rate, a user may have more choice of recording rate. For example, standard mode and long-time mode may be prepared like a conventional VTR so that a user can select one of the recording rates, considering which one of the picture quality and the long recording time has higher priority. Alternatively, the apparatus may be configured to have many steps for recording rate, so that a user can successively varies the recording rate by using a volume.

However, in a conventional information recording apparatus, it was not necessarily easy to optimize the steps number of the recording rate. If the step number of the recording rate is small, the selectable range of recording time and picture quality are limited, and the apparatus is inconvenient for use. On the other hand, if the step number of the recording rate is large, the manipulation becomes complicated, and it becomes difficult to determine how long recording time the set recording rate corresponds to. Therefore, the user sometimes cannot manipulate the apparatus smoothly at the time of recording. This may undesirably result in the delay the recording start and/or failure to obtain desired picture quality, thereby causing various troubles.

On the other hand, according to users or using condition, the adjustment of the recording rate may be unnecessary. For example, sometimes it is enough if a standard recording time indicated on a disc package is stably ensured. Thus, in the conventional recording apparatus, it was difficult to optimize the presence and absence of the variable setting and/or the step number of recording rate in accordance with various users and/or using condition.

It is an object of the present invention to provide an information recording apparatus which achieves easy adjustment and easy-handling in view of user's various needs relating to picture quality and recording time, by enabling switching between a standard mode for automatically setting standard recording rate and a manual mode for setting recording rate of multiple steps according to the user's choice.

According one aspect of the present invention, there is provided an information recording apparatus including: a compressive-encoder for compressive-encoding input information with varying recording rate to output compressed data: a recording mode switching unit for switching recording mode for setting the recording mode in the compressive-encoder between standard mode in which predetermined standard recording rate is set and manual mode in which one recording rate selected from a plurality of recording rates; an operation unit for setting the one recording rate in the manual mode; and a recording unit for recording the compressed data outputted by the compressive-encoder onto an information storage medium.

In accordance with this invention, the input information inputted to the information storage medium is compressive-encoded with the recording rate set by the compressive-encoder to be outputted as the compressed data, which is recorded on the information storage medium by the recording unit. At this time, the recording mode switching unit can select one of the standard mode and the manual mode. In the compressive-encoding, the predetermined standard recording rate is set in the standard mode, and one recording rate selected by the setting operation of the operation unit is set in the manual mode. Therefore, if the adjustment of the recording quality and/or recording time is unnecessary, the standard mode may be selected to omit undesired time for adjustment, thereby enabling quick recording. On the other hand, if a user wants to precisely set the recording quality and/or recording time, the desired recording rate may be selected in the manual mode. Thus, both of the optimization of the recording quality and/or recording time and the simplification of the adjustment may be achieved at the same time.

The apparatus may further include a display controller for controlling display of setting information set in the manual mode on a display device. By this, in the manual mode, various setting information is shown on a display device. Therefore, the user can determine the appropriate recording rate with watching the displayed setting information when setting the recording rate, thus improving the convenience in use.

The display controller may display figures for visually showing the selected one recording rate on the display device. By this, in the manual mode, the display device shows figures to visually show the recording rate. This is useful for the user to recognize the recording rate to be set, and assists the setting operation by the user.

The display controller may a display mark which shows a position of the standard recording rate in the plurality of recording rates on the display device. By this, in the manual mode, the position of the standard recording rate corresponding to the plurality of recording rate is shown on the display device. Hence, the user can easily recognize the relation between the recording rate to be set and the standard recording rate. Thus, the setting operation by the user may be assisted.

The display controller may display the setting information in a manner superimposed on the input information on the display device. By this, in the manual mode, various setting information is shown on the display device in a manner superimposed on the input information. Therefore, the user can determine the optimum recording rate with watching the input information, and can select the recording rate suitable for the input information.

The input information may include an input video signal and an input audio signal accompanying to the input video signal, and the display controller may display the setting information in a manner superimposed on the input video signal on the display device. By this, the input video signal and the input audio signal are inputted to the information recording apparatus, and the display device displays the input video signal. Therefore, the user can set the recording rate, by which the input video signal is compressed, without interrupting the display of the video signal.

The apparatus may further include an extensive-decoder for extensive-decoding the compressed data to produce the input information, wherein the display controller displays the decoded input information on the display device. By this, in the manual mode, when the compressive-encoder outputs the compressed data, the extensive-decoder decodes the compressed data and the input information is shown on the display device. Therefore, the recording quality with using the recording rate being set may be visually recognized without actually performing the recording and reproduction. This enables appropriate recording rate selection.

The input information may include an input video signal and an input audio signal accompanying the input video signal, and the display controller may display the input video signal decoded by the extensive-decoder on the display device. By this, the input video signal and the accompanying input audio signal are inputted to the information recording apparatus, and the display device shows the decoded input video signal. Thus, the user can appropriately recognize the recording rate used for the compression by visually checking the video signal.

The apparatus may further include a remaining time calculating unit for calculating a remaining time for which information can be recorded on the information storage medium with the selected one recording rate. By this, in the manual mode, when one recording rate is selected, the remaining time for recording information on the unrecorded area of the information storage medium is calculated and displayed. Therefore, the user can accurately recognize the remaining time corresponding to the recording rate, and can set optimum recording rate with ensuring necessary recording time.

The apparatus may be configured such that varying width of steps of the plurality of recording rates decreases as the recording rate increases. Therefore, the recording time may be precisely adjusted when the recording rate is high and the recording time is short, and the recording rate setting may be conveniently carried out.

The apparatus may be configured such that a minimum recording rate in the plurality of recording rates is lower than the standard recording rate, and a maximum recording rate in the plurality of recording rates is higher than the standard recording rate. Therefore, the user can set the appropriate recording rate to be higher or lower than the standard recording rate.

The apparatus may be configured such that standard recording time corresponding to each of the plurality of recording rates is N (N is an integer) times of a predetermined reference time. Therefore, the user can easily determine the recording time and conveniently carry out the recording rate setting.

The nature, utility, and further features of this invention will be more clearly apparent from the following detailed description with respect to preferred embodiment of the invention when read in conjunction with the accompanying drawings briefly described below.
FIG. 1 is a block diagram showing an overall configuration of an information recording/reproducing apparatus according to the present invention ;
FIGS. 2 to 5 are flowcharts showing the recording rate setting processing;
FIG. 6 is a diagram showing key arrangement on a remote controller;
FIG. 7 is an example of manual setting picture in the manual mode; and
FIG. 8 shows table data for each step of recording rate that can be set for a video encoder and a video decoder.

The preferred embodiment of the present invention will now be described below with reference to the attached drawings. In the following embodiment, the present invention is applied to information recording/reproducing apparatus which records encoded video signal and audio signal onto a recordable optical disc.

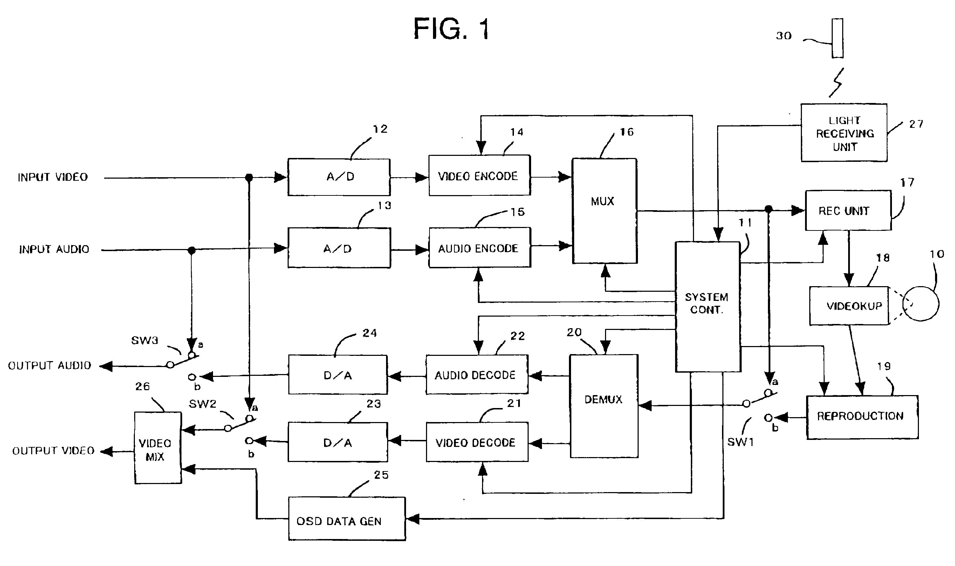

FIG. 1 is a block diagram showing an overall configuration of an information recording/reproducing apparatus according to the present invention. In order to record digital data on and reproduce the digital data from an optical disc 10 (DVD-RW) serving as an information storage medium, the information recording/reproducing apparatus shown in FIG. 1 includes a system controller 11, A/D converters 12, 13, a video encoder 14, an audio encoder 15, a multiplexer 16, an information recording unit 17, a pickup 18, an information reproducing unit 19, a demultiplexer 20, a video decoder 21, an audio decoder 22, D/A converters 23, 24, an OSD (On Screen Display) data generating unit 25, a video mixer 26, a remote-control light receiving unit 27, and switches SW1, SW2, SW3.

With the above configuration, the system controller 11 controls overall operation of the information recording/reproducing apparatus. The system controller 11 includes a CPU and storage means such as a RAM and a ROM (not shown), and reads out and executes predetermined programs. The system controller 11 functions as a recording mode switcher, a remaining time detector and a display controller.

As shown in FIG. 1, the system controller 11 supplies control signals to the video encoder 14, the audio encoder 15, the multiplexer 16, the information recording unit 17, the information reproducing unit 19, the demultiplexer 20, the video decoder 21, the audio decoder 22, and the OSD data generating unit 25, to control the operation of those components.

The A/D converter 12 samples the analog input video signal to convert it to digital video data. The video encoder 14 compresses the digital video data outputted by the A/D converter 12 according to a preset recording rate to generate compressed video data. The video encoder 14 functions as a compressive-encoding unit in this embodiment. The video encoder 14 uses MPEG (Moving Picture Experts Group) system as the compression system, for example.

In this embodiment, a plurality of recording rates are prepared for the video encoder 14, and one of them is set. The video encoder 14 performs the compression processing with the compression rate which varies every moment according to the complication degree of the inputted digital video data, so that the set recording rate is obtained on average for a certain time period (such as 10 minutes), In this case, there are prepared two modes for setting the recording rate, i.e., a standard mode and a manual mode. In the standard mode, one of the plural recording rates is preset as a standard recording rate, and the standard rate is automatically used to perform compression processing. In the manual mode, a user can select and set desired one of the plural recording rates, and the compression processing is performed with the recording rate thus set by the user. The detail of the recording rate setting will be described later.

The A/D converter 13 samples an analog input audio signal to convert is to digital audio data. The input audio signal is inputted together with the input video signal. The audio encoder 15 compresses the digital audio data outputted by the A/D converter 13 to generate compressed audio data. It is noted that the compression rate may be varied in the same manner as the video encoder 14. Generally, since the overall recording rate is determined dependently upon the video data of large data amount, the compression rate of the audio encoder 15 may be fixed.

The multiplexer 16 multiplexes the compressed video data outputted by the video encoder 14 with the compressed audio data outputted by the audio encoder 15 to output multiplexed data. The information recording unit 17 generates a recording signal to be recorded, on the basis of the multiplexed data outputted by the multiplexer 16. The pickup 18 drives a semiconductor laser (not shown) in accordance with the recording signal outputted by the information recording unit 17, and irradiates a light beam onto the optical disc 10 to form pits corresponding to the recording signal. Therefore, the pickup 18 serves as a recording unit in this embodiment.

On the other hand, at the time of reproducing information from the optical disc 10, the detector of the pickup 18 outputs a detection signal based on the reflected light from the optical disc 10. The information reproducing unit 19 applies the amplification and waveform-shaping processing onto the detection signal to generate reproduction signal.

The switch SW1 selectively supplies one of the reproduction signal from the information reproducing unit 19 and the multiplexed data from the multiplexer 16 to the demultiplexer 20. The demultiplexer 20 separates the reproduction signal outputted by the information reproducing unit 19 or the multiplexed data outputted by the multiplexer 16 into the compressed video data and the compressed audio data, and output them. The video decoder 21 applies extension processing, which is reverse processing to the compression processing by the video encoder 14, onto the compressed video data outputted by the demultiplexer 20 to generate digital video data. The video decoder 21 serves as an extension-decoder. The D/A converter 23 converts the digital video data outputted by the video decoder 21 into an analog signal, and outputs it as a video signal. The audio decoder 22 applies the extension processing, which is reverse to the compression processing by the audio encoder 15, onto the compressed audio data outputted by the demultiplexer 20 to generate digital audio data. The D/A converter 24 converts the digital audio data outputted by the audio decoder 22 into an analog signal and outputs it as an audio signal.

The OSD data generating unit 25 generates OSD data, such as character string, to be superimposed on the video signal and displayed, in accordance with the control by the system controller 11. For example, when the user performs various setting operation using the display screen, predetermined characters and/or figures are superimposed on the background video to assist the user's setting operation.

The switch SW2 selectively supplies the input video information or the video signal from the D/A converter 23 to the video mixer 26. The switch SW3 selectively outputs the input audio signal or the audio signal from the D/A converter 24 to outside. The video mixer 26 mixes the video signal from the switch SW2 with the OSD data from the OSD data generating unit 25 to generate an output video signal to be displayed on a single display screen, and outputs it to a display device such as an external display. The remote-control light receiving unit 27 receives infrared radiation from a remote controller 30, on which various operation setting for the information recording/reproducing apparatus is performed by the key operation. The remote controller 11 detects key data corresponding to the pressed key of the remote controller 30 and outputs the key data to the system controller 11.

As shown in FIG. 1, the switches SW1, SW2 and SW3 may be switched over to either one of the a-terminal or the b-terminal, and the switching is controlled by the system controller 11. In the information recording/reproducing apparatus shown in FIG. 1, there are different three routes for the video signal and the audio signal in accordance with the switching condition of the switches SW1, SW2 and SW3. These three routes correspond to the normal reproduction situation, the manual setting display in the manual mode and the check display in the manual mode, respectively.

In the normal reproduction, all of the switches SW1, SW2 and SW3 are turned over to the b-terminal side. Thus, the video signal produced based on the recorded data on the optical disc 10 passes through the pickup 18, the information reproducing unit 19, the switch SW1, the demultiplexer 20, the video decoder 21, the D/A converter 23, the switch SW2 and the video mixer 26. The audio signal passes through the pickup 18, the information reproducing unit 19, the switch SW1, the demultiplexer 20, the audio decoder 22, the D/A converter 24 and the switch SW3.

In the manual setting display in the manual mode, the switches SW2 and SW3 are turned over to the a-terminal side so that the user can visually recognize the input video as the background image on the display device. Namely, the input video signal passes through the switch SW2 and mixed with the OSD data from the OSD data generating unit 25 by the video mixer 26 to be outputted as an output video signal. On the other hand, the input audio signal is passed through the switch SW3 and outputted as it is.

In the check display in the manual mode, the switch SW1 is turned over to the a-terminal side and the switches SW2 and SW3 are turned over to the b-terminal side so that the user can check the video recorded with the recording rate set by the user when the user presses the check key in the manual mode. Thus, the input video signal passes through the A/D converter 12, the video encoder 14, the multiplexer 16, the switch SW1, the demultiplexer 20, the video decoder 21, the D/A converter 23, the switch SW2 and the video mixer 26 and is outputted as an output video signal. On the other hand, the input audio signal passes through the A/D converter 13, the audio encoder 15, the multiplexer 16, the switch SW1, the demultiplexer 20, the audio decoder 22, the D/A converter 24 and the switch SW3, and is outputted as an output audio signal. In other words, in this check display, the recorded data on the optical disc 10 is not used. Instead, the input signal is compressed with a predetermined recording rate, and then the compressed signal is immediately extended with the same recording rate to be outputted to outside. Here, since the reproduction quality is determined mainly in dependence upon the recording rate, it is possible to check the picture quality obtained if the recorded data is reproduced after its recording.

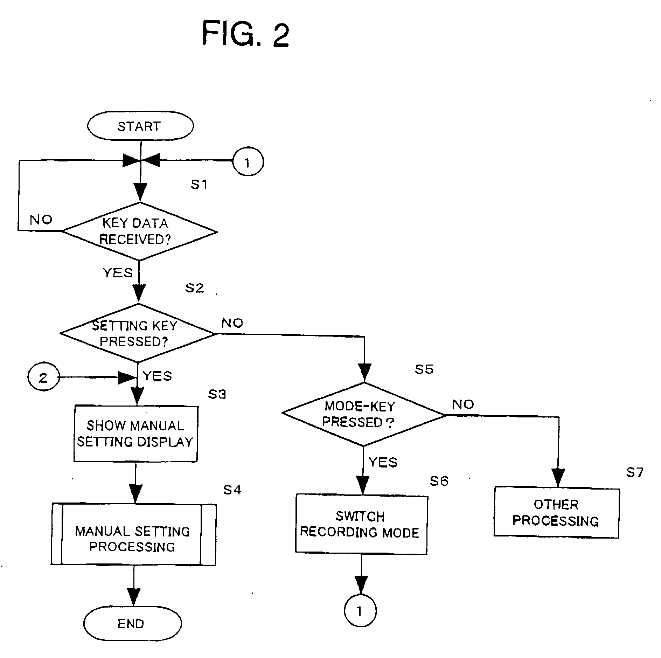

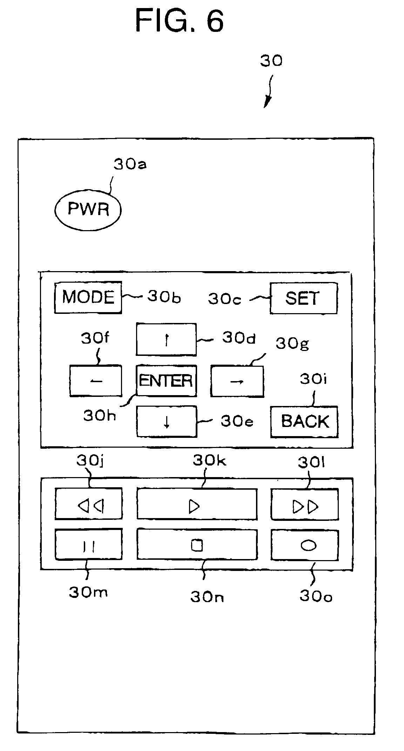

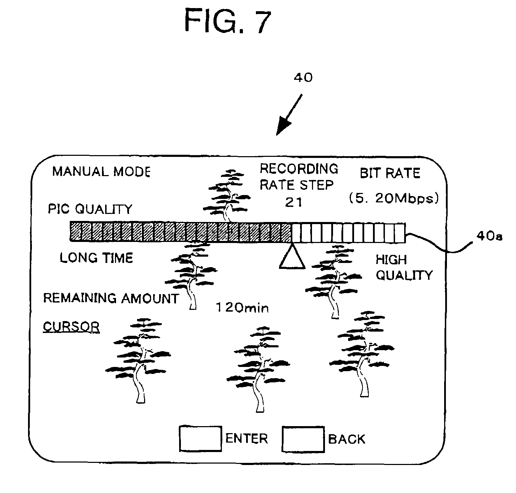

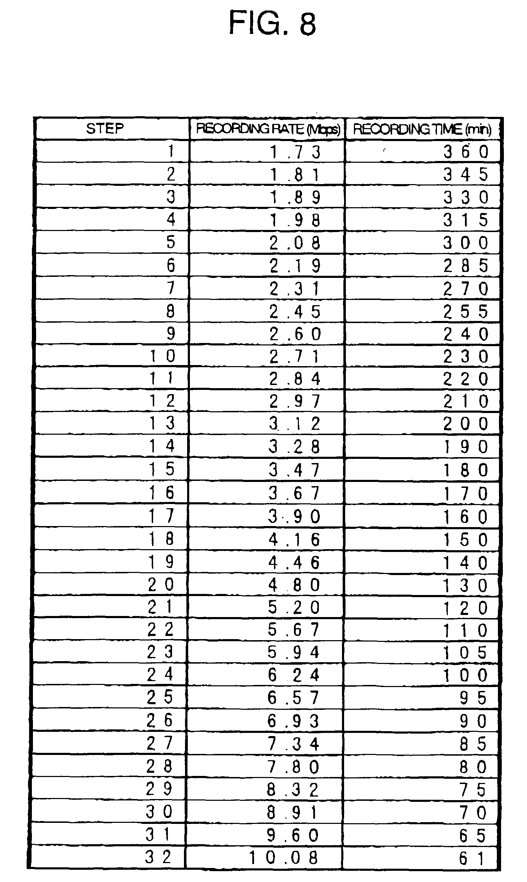

Next, the description will be given of the recording rate setting in the information recording/reproducing apparatus according to the embodiment, with reference to FIGS. 2 to 8. FIGS. 2 to 5 are flowcharts showing the recording rate setting processing performed by the system controller 11. FIG. 6 is a diagram showing the key arrangement on the remote controller 30. FIG. 7 is an example of manual setting video in the manual mode. FIG. 8 shows table data for each step of the recording rate that can be set for the video encoder 14 and the video decoder 21.

In the recording rate setting processing of this embodiment, it is assumed that the user has manipulated the operation keys to enter the initial setting menu of the information recording/reproducing apparatus. Also, it is assumed that the display pictures at the time of various setting is shown on an external display device connected to the information recording/reproducing apparatus. After entering the initial setting menu, as shown in FIG. 2, the system controller 11 determines whether or not the remote-control light receiving unit 27 receives the key data from the remote controller 30 (step S1). Here, the key arrangement on the remote controller 30 will be described. On the remote controller 30, a plurality of keys are arranged, which are pressed by the user to execute various operation in the information recording/reproducing apparatus. FIG. 6 shows major keys on the remote controller 30, among which a power key 30a for power-on and power-off of the information recording/reproducing apparatus is provided at the upper portion. Further, there are provided keys for various setting, including a mode-key 30b for switching the recording modes, a setting-key 30b for setting recording rate setting, an up-key 30c, a down-key 30e, a left-key 30f and a right-key 30g for moving the cursor on the screen up-down and left-right direction, an enter key 30h for determining the object of the operation, and a back-key 30i to go back to the previous state. Further, as keys to be used at the time of reproduction and/or recording, a rewind key 30j, a reproduction key 30k, a feed forward key 301, a pause key 30m, a stop key 30n and a recording key 30o are provided.

If the key data is not received (step S1: No), the receipt of the key data is waited for. If the key data is received (step S1: YES), it is determined whether or not the setting key 30c is pressed based on the received key data (step S2). If the setting key 30c is pressed (step S2; YES), the manual setting display is shown on the external display device (step S3), and the manual setting processing is performed in response to the key operation by the user (step S4). The processing in step S4 will be described later in detail.

Here, the manual setting display 40 shown on the display device will be described with reference to FIG. 7. In the manual setting display 40 in FIG. 7, characters and/or figures are shown by using the OSD data generated by the OSD data generating unit 25. At the background, the input video signal is shown such that the characters and/or figures are superimposed onto the background video. The manual setting display 40 in FIG. 7 shows the step of the current recording rate and the bit rate value corresponding to the current recording rate step at the upper portion. In addition, an elongated bar 40a is shown to indicate the current recording rate. The hatched portion of the bar 40a corresponds to the position of the currently set recording rate. As described later, the recording rate of 32 steps is prepared, and the bar 40a shows the positions corresponding to the 32 steps of the recording rate. The recording rate is low as the position goes to left, and the recording rate is high as the position goes to right. Namely, as the position goes to the left side of the bar 40a, the recording time is prioritized, and as the position goes to the right side of the bar 40a, the picture quality is prioritized. This is shown by "LONG-TIME" at the left and the "HIGH QUALITY" at the right side. In the manual setting display 40, the cursor may be moved by the operation. In FIG. 7, the cursor may be moved to the position of "PICTURE QUALITY" at the left of the bar 40a or to the position of the "CHECK" below. At the time of setting the recording rate by the bar 40a, the cursor should be moved to the position of "PICTURE QUALITY" and the left-key 30f or right-key 30g of the remote controller 30 may be operated. The specific operation will be described later. In FIG. 7, the cursor position is indicated by the underline, which shows that the cursor is at the position of "CHECK".

When the cursor is at the position of "CHECK", the check display for the currently-set recording rate is shown on the display by pressing the enter key 30h. In this check display, the switch SW1 is connected to the a-terminal side as described above, and hence the picture quality of the currently-set recording rate may be checked without reproduction- Below the bottom line of the bar 40a (between the 21th and 22th steps in FIG. 7), a triangle mark is shown to visually show the position of the standard recording rate (5.20 Mbps). By this, the user can set the recording rate with referring to the standard recording rate. In FIG. 7, the position of the currently-set recording rate coincides with the standard recording rate. In the manual setting display, the remaining recording time of the recording space on the optical disc 10 calculated on the assumption that the recording is continued and finished with the currently-set recording rate shown by the bar 40a, together with words "REMAINING TIME". Further, "ENTER" and "BACK" are shown at the bottom corresponding to the enter key 30h and the back-key 30i of the remote controller 30, respectively.

Referring back to FIG. 2, if it is determined that the setting key 30c has not been pressed yet (step S2; NO), it is determined whether or not the mode-key 30b is pressed based on the received key data (step S5). If the mode-key 30b is pressed (step S5; YES), the current recording mode is changed (step S6). Namely, the manual mode is changed to the standard mode, and the standard mode is changed to the manual mode. After switching the recording mode, the process goes back to step S1 to repeat the same steps. If the mode-key 30b has not been pressed yet (step S5; NO), the key pressed is the key other than the setting-key 30c and the mode-key 30b, and the processing corresponding to that key is performed. Since this processing is not directly related to the present invention, the description will be omitted.

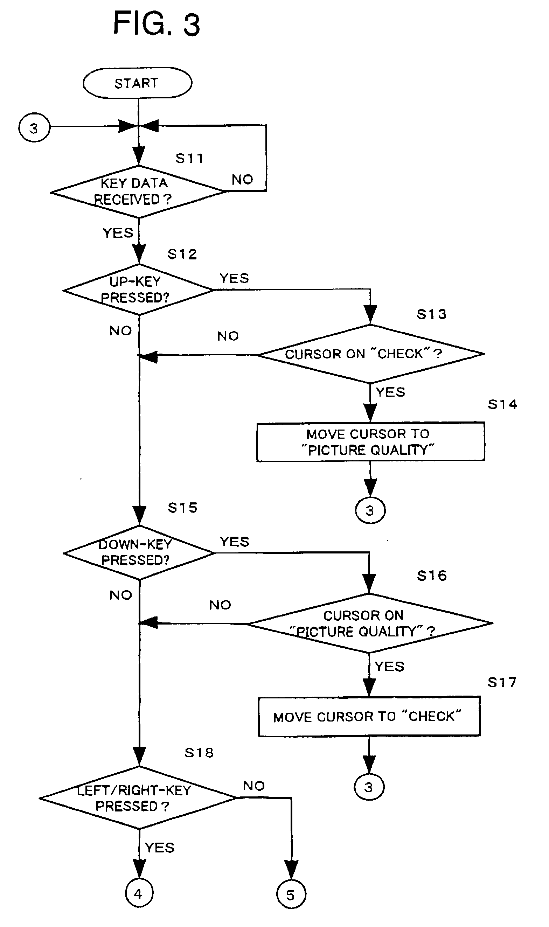

Next, the detailed processing of step S4 will be described with reference to FIGS . 3 to 6. As shown in FIG. 3, in the situation that the manual setting display 40 is shown, it is determined whether or not the key data is received from the remote controller 30 via the remote-control light receiving unit 27 (step S11). If not (step S11; NO), the receipt of the key data is waited for. When the key data is received (step S11; YES), it is then determined whether or not the up-key 30d is pressed (step S12). If the up-key 30d is pressed (step S12; YES), it is then determined whether or not the cursor on the manual setting display 40 is at the position of "CHECK" (step S13). If the cursor is at the position of "CHECK" (step S13; YES), the cursor is moved to the position of the "PICTURE QUALITY" on the manual setting display 40, and the process goes back to step S11. If step S12 or S13 results in NO, it is determined whether or not the down-key 30e is pressed (step S15). If the down-key 30e is pressed (step S15; YES), it is then determined whether or not the cursor on the manual setting display 40 is at the position of "PICTURE QUALITY" (step S16) If the cursor is at the position of "PICTURE QUALITY" (step S16; YES), the cursor is moved to the position of the "CHECK" on the manual setting display 40, and the process goes back to step S11.

Subsequently, if step S15 or S16 results in NO, it is determined whether the left-key 30f or the right-key 30g is pressed (step S18). If one of them is pressed (step S18; YES), it is determined whether or not the cursor in the manual setting display 40 is at the position of "PICTURE QUALITY" (step S19). If the cursor is at the position of "PICTURE QUALITY" (step S19; YES), it is determined which one of the left-key 30f or the right-key 30g is pressed (step S20). If the cursor is not at the position of "PICTURE QUALITY" (step S19; NO), the process goes back to step S11.

After the determination in step S20, if the left-key 30f is pressed, it is determined whether or not the recording rate being set is the minimum value, i.e., at the lower limit (step S21). If the recording rate being set is not the minimum value (step S21; NO), the recording rate is decreased by one step (step S22). If the recording rate being set is the minimum value (step S21; YES), the recording rate is not changed. On the other hand, in the determination in step S20, if the right-key 30g is pressed, it is determined whether or not the recording rate being set is the maximum value, i.e., at the upper limit (step S23). If the recording rate being set is not the maximum value (step S23; NO), the recording rate is increased by one step (step S24). If the recording rate being set is the maximum value (step S23; YES), the recording rate is not changed.

By referring to FIG. 8, the description will be given of the table data of each step of the recording rate that can be set. As shown in FIG. 8, the recording rate may be set to one of the 1st to 32nd steps, and this table data is stored in a predetermined storage unit within the system controller 11. The table data shown in FIG. 8 includes recording rates corresponding to the respective steps, and recording times for which information can be recorded onto an optical disc 10 having 4.7 G-byte storage capacity by the corresponding recording rates. The 1st step has the minimum recording rate and maximum recording time, and the 32nd step has the maximum recording rate and the minimum recording time. The recording rate 5.2 Mbps at the 21st step is set as the above mentioned standard recording rate. As the recording rate increases from the 1st to the 32nd step, the recording time decreases.

In the table data shown in FIG. 8, the recording time change by 15 minutes in the 1st to 9th steps, by 10 minutes in the 9th to 22nd steps, and by 5 minutes in the 22nd to 31st steps. Thus, all of the 1st to 32nd steps have the recording time which is multiple of 5, i.e., 5 × N (N is an integer). Namely, except for the 32nd step corresponding to the upper limit of the recording rate, the recording rates are set with regular varying width, and this enables easy judgement by the user at the time of setting the recording rate in the manual mode. According to the DVD-RW format, the maximum recording rate is limited to 10.8Mbps. Further, since the varying width of the recording time is large if the recording time is large, and is small if the recording time is small, appropriate adjustment in view of the recording time can be performed.

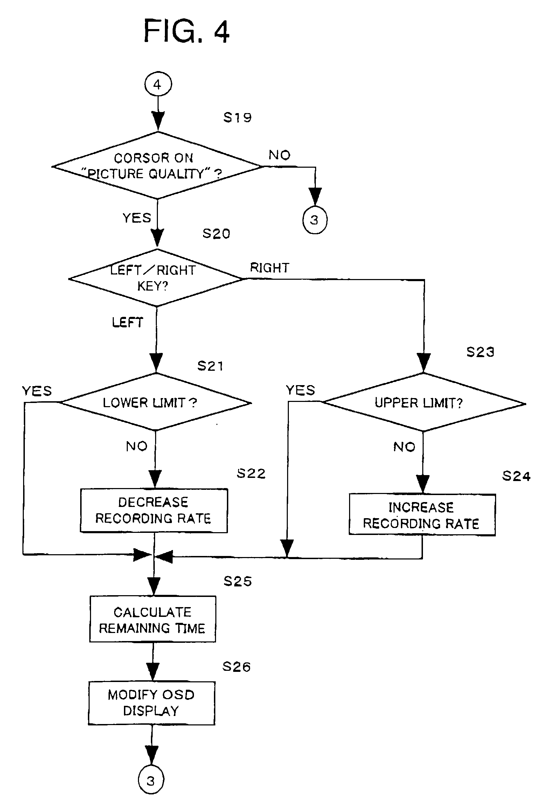

Referring back to FIG. 4, after step S22 or S24, the remaining time is calculated based on the remaining recording capacity of the optical disc 10 and the recording rate being set (step S25). Specifically, the data size of the unrecorded area of the optical disc 10 is detected, and the detected data size is divided by the bit rate value corresponding to the recording rate set. Then, by using the setting information thus determined, the OSD data to be shown on the manual setting display 40 is modified (step S26), and the process goes back to step S11. Namely, the display of the bit rate value and the bar 40a on the manual setting display 40 is updated in accordance with the recording rate set in steps S22 and S24, and the display of "REMAINING TIME" is updated by the result in step S25 is updated.

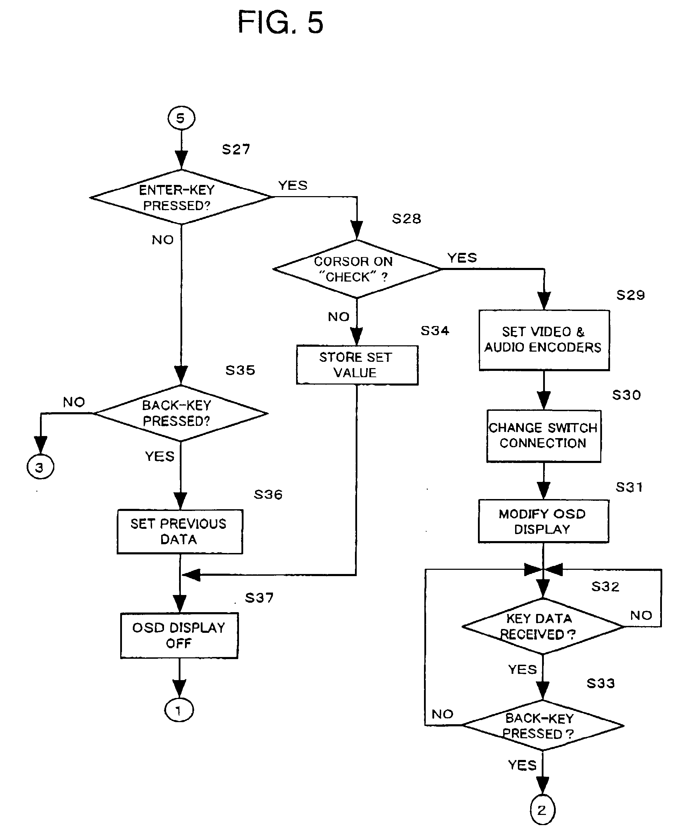

Then, if none of the left-key 30f and the right-key 30g is pressed in step S18 (step S18; NO), it is determined whether or not the enter key 30h is pressed (step S27), as shown in FIG. 5. If the enter key 30h is pressed (step S27; YES), it is determined whether or not the cursor on the manual setting display 40 is at the position of "CHECK" (step S28). If the cursor is at the position of "CHECK" (step S28; YES), the display processing of the check display is started (step S29 to S33).

When the display processing of the check display is started, the compression rate and extension rate corresponding to the latest recording rate is set to the video encoder 14 and the video decoder 21 (step S29). Then, in order to change the route of the video signal and the audio signal shown in FIG. 1 to be appropriate for the display processing of the check display, the switches SW1. SW2 and SW3 are switched (step S30). As described above, by turning the switch SW1 to the a-terminal side and turning the switches SW2, SW3 to the b-terminal side, the picture quality at the recording rate being set may be visually checked.

Then, the OSD data shown on the manual setting display 40 is modified (step S31). Since the input video signal passed through the above route is displayed on the check display, characters and/or figured which are unnecessary for the check are erased from the display. At this stage, out of the OSD data shown in FIG. 7, only "BACK" is shown, and other characters and figures are all erased. Then, it is determined whether or not the key data is received from the remote controller 30 via the remote-control light receiving unit 27 (step S32). If the key data is not received (step S32; NO), the receipt is waited for. If the key data is received (step S32; YES), it is determined, based on the received key data, whether or not the back-key 30i is pressed (step S33). If the back-key 30i is pressed (step S33; YES), the display processing of the check display is ended and the process goes back to step S2. On the other hand, if the back-key 30i is not pressed (step S33; NO), the process goes to step S32 to continue the display processing of the check display.

If the cursor is not at the position of "CHECK" (step S28; NO), the current setting information is stored in the storage unit of the system controller 11 in response to the pressing-down of the enter key 30h in step S27 (step S34), Thereafter, the setting information set in step S34 is maintained as effective until it is updated. If the enter key 30h is not pressed (step S27; NO), it is determined based on the received key data whether or not the back-key 30i is pressed (step S35). If the back-key 30i is pressed (step S35; YES), the setting information newly set is cancelled, and the setting information is set to the previous contents (step S36). If the back-key 30i is not pressed (step S35; NO), the process goes back to step S11. After steps S34 or S36, the OSD display corresponding to the manual setting display 40 is set to OFF to terminate the generation of the OSD data (step S37), and the process goes back to step S1.

As described above, according to the information recording/reproducing apparatus, the user can enter the manual mode to select and set the optimum recording rate in consideration of the remaining recording amount/time on the optical disc and the picture quality. The manual setting display 40 shows a bar 40a which diagrammatically indicates the recording rate, and a triangle mark which indicates the position of the standard recording rate so that a user can easily recognize the recording rate. The picture quality corresponding to a certain recording rate may be advantageously checked by selecting "PICTURE QUALITY" to see the check display. This is advantageous because the recording and reproduction are not necessary. The user can select, from the recording rates of 32 steps for example, a high recording rate if the picture quality is prioritized and a low recording rate if the recording time is prioritized. Thus, the user can desirably and freely set the recording rate.

By pressing the mode-key 30b of the remote controller 30, the mode may be changed from the manual mode to the standard mode. In such a case, the recording rate is set to the preset standard recording rate, and hence the above mentioned manual adjustment is unnecessary. Thus, the recording onto the optical disc 1 may be quickly started. Particularly, if the user think that the standard recording time and standard picture quality are sufficient, this standard mode may be advantageously used.

The above-described embodiment is directed to the case where the optical disc 10 is used as an information storage medium. However, the application of this invention is not limited to such style, and the present invention may be broadly applied to various other information storage media. For example, a hard disk may be used as the information storage medium. In such a case, many components such as the video encoder 14 may be realized by software for personal computer.

The above-described embodiment is directed to the case where the input information to the information storage medium are the analog input video signal and the analog input audio signal. However, the application of this invention is not limited to this example, and a digital input video signal and a digital input audio signal may be inputted. In that case, the A/D converters 12, 13 and D/A converters 23, 24 may be omitted. The input information may be, not the video and/or audio signal, but general analog or digital signal. While various operation are set by using the remote controller 30 in the above embodiment, such operation may be made by using keys provided on the body of the information recording/reproducing apparatus.

As described above, according to the present invention, at the time of compressive-encoding of the input information to be recorded onto the information storage medium, the user can select one of the standard mode in which the standard recording rate is selected and the manual mode in which the user can select desired one of a plurality of preset recording rates. Therefore, the user can precisely adjust the recording time and the recording picture quality if necessary. If such an adjustment is not necessary, the user can simply select the standard mode to omit such a manual adjustment. Thus, by the information recording/reproducing apparatus of the invention, the recording rate may be appropriately set in view of the recording situation and/or favor of the user.

## Claims

1. An information recording apparatus comprising:
a compressive-encoder (14, 15) for compressive-encoding input information with varying recording rate to output compressed data:
a recording mode switching unit (11) for switching recording mode for setting the recording mode in the compressive-encoder between standard mode in which predetermined standard recording rate is set and manual mode in which one recording rate is selected from a plurality of recording rates;
an operation unit (30) for setting said one recording rate in the manual mode; and
a recording unit (17) for recording the compressed data outputted by the compressive-encoder (14, 15) onto an information storage medium (10).

2. The apparatus according to claim 1, further comprising a display controller (11) for controlling display of setting information set in the manual mode on a display device.

3. The apparatus according to claim 2, wherein the display controller (11) displays figures for visually show said selected one recording rate on the display device.

4. The apparatus according to claim 3, wherein the display controller (11) displays a mark which shows a position of the standard recording rate in the plurality of recording rates on the display device.

5. The apparatus according to claim 2, wherein the display controller (11) displays the setting information in a manner superimposed on the input information on the display device.

6. The apparatus according to claim 2, wherein the input information includes an input video signal and an input audio signal accompanying to the input video signal, and wherein the display controller (11) displays the setting information in a manner superimposed on the input video signal on the display device.

7. The apparatus according to claim 2, further comprising an extensive-decoder (21, 22) for extensive-decoding the compressed data to produce the input information, wherein the display controller (11) displays the decoded input information on the display device.

8. The apparatus according to claim 7, wherein the input information includes an input video signal and an input audio signal accompanying the input video signal, and wherein the display controller (11) displays the input video signal decoded by the extensive-decoder (21, 22) on the display device.

9. The apparatus according to claim 2, further comprising a remaining time calculating unit (11) for calculating a remaining time for which information can be recorded on the information storage medium (10) with said selected one recording rate.

10. The apparatus according to claim 1, wherein varying width of steps of the plurality of recording rates decreases as the recording rate increases.

11. The apparatus according to claim 1, wherein a minimum recording rate in the plurality of recording rates is lower than the standard recording rate, and wherein a maximum recording rate in the plurality of recording rates is higher than the standard recording rate.

12. The apparatus according to claim 1, wherein standard recording time corresponding to each of the plurality of recording rates is N (N is an integer) times of a predetermined reference time.
